Europäisches Patentamt

European Patent Office

Office européen des brevets

(11) Veröffentlichungsnummer: **0 430 866 A2**

# (12) EUROPÄISCHE PATENTANMELDUNG

(21) Anmeldenummer: 90810811.1

(22) Anmeldetag: 23.10.90

(51) Int. Cl.5: **F16L 47/02**

(30) Priorität: 03.11.89 CH 3969/89

(43) Veröffentlichungstag der Anmeldung:
05.06.91 Patentblatt 91/23

(84) Benannte Vertragsstaaten:
AT BE CH DE DK FR GB IT LI NL Patentblatt

(71) Anmelder: **Geberit AG**
**Schachenstrasse 77**
**CH-8645 Jona(CH)**

(72) Erfinder: **Häsler, Heinz**
**Oberseestrasse 90**
**CH-8645 Jona(CH)**

(74) Vertreter: **Groner, Manfred et al**
**c/o Patentanwalts-Bureau Isler AG Postfach**
**6940**
**CH-8023 Zürich(CH)**

(54) **Verbindungsstück.**

(57) Das Verbindungsstück besitzt einen zylindrischen Körper (2) aus thermoplastischem Material, in den innenseitig ein Widerstandsheizdraht (4) eingelegt ist. Eine Oeffnung (20) lässt sich bis auf den Durchmesser eines Leitungsrohres aufweiten, so dass das Verbindungsstück radial auf das Leitungsrohr aufgesetzt werden kann. Durch erwärmen des Widerstandsheizdrahtes (4) wird das aufgesetzte Verbindungsstück mit dem Rohr verschweisst. Das Verbindungsstück eignet sich insbesondere zur Herstellung einer Fixpunktbefestigung, wobei in eine umlaufende Vertiefung des Körpers (2) eine Rchrschelle eingesetzt wird.

Fig. 3

EP 0 430 866 A2

## VERBINDUNGSSTÜCK

Die Erfindung betrifft ein Verbindungsstück nach dem Oberbegriff des unabhängigen Patentanspruchs 1.

Im Stand der Technik werden solche als Schweissmuffen bezeichnete Verbindungstilcke beispielsweise verwendet, um eine Rohrschelle auf einer Rohrleitung gegen eine Verschiebung in den Achsrichtungen zu fixieren. Neben der Rohrschelle müssen beidseitig solche Schweissmuffen angebracht und mit der Rohrleitung elektrisch verschweisst werden. Mit solchen Fixpunktbefestigungen werden Rohrleitungen aus Kunststoff in einzelne Ausdehnungsabschnitte unterteilt. Dadurch sollen unkontrollierte Leitungsbewegungen verhindert werden.

Der Erfindung liegt die Aufgabe zugrunde, ein Verbindungsstück der genannten Art zu schaffen, das insbesondere die Herstellung von Fixpunktbefestigungen vereinfacht. Die Aufgabe wird durch die Erfindung gemäss Anspruch 1 gelöst.

Die Oeffnung des erfindungsgemässen Verbindungsstückes wird aufgeweitet, bis sie wenigstens den Durchmesser des Rohres aufweist und das Verbindungsstück radial auf die Rohrleitung aufgesetzt werden kann. Mit einer Rohrschelle oder einer anderen Spannvorrichtung wird das Verbindungsstück an die Aussenseite der Rohrleitung gelegt und in bekannter Weise der Schweissvorgang durchgeführt. Das Verbindungsstück muss somit nicht wie bisher bei den üblichen Schweissmuffen von einem freien Ende her aufgeschoben werden, sondern wird radial aufgesetzt. Auch nach der Fertigstellung einer Rohrleitung ist ein nachträgliches Anbringen eines Verbindungsstückes in einfacher Weise möglich. Ein wesentlicher Vorteil des erfindungsgemässen Verbindungsstück besteht darin, dass es mit Rohren verschweisst werden kann, die unterschiedliche Durchmesser aufweisen. So kann beispielsweise ein Verbindungsstück mit einem Umfang von etwa 152 mm mit Rohren mit einem Durchmesser von 50, 56 oder 63 mm verschweisst werden. Dadurch wird die Lagerhaltung und die Montage wesentlich vereinfacht.

Das erfindungsgemässe Verbindungsstück eignet sich insbesondere zur Herstellung einer Fixpunktbefestigung. Denkbar sind hier jedoch auch andere Anwendungen.

Nach einer Weiterbildung der Erfindung besitzt das Verbindungsstück auf seiner Aussenseite Mittel zur Fixierung einer Rohrschelle. Dadurch ist eine Fixpunktbefestigung mit lediglich einem Verbindungsstück und einer Rohrschelle möglich. Die Rohrschelle wird vor dem Schweissvorgang um das Verbindungsstück gelegt und fixiert dieses damit auf der Rohrleitung. Nach dem Schweissvorgang dient die Rohrschelle dazu, das Verbindungsstück bzw. die Rohrleitung über einen Träger mit einer Gebäudewand zu verbinden.

Eine besonders sichere und einfache Fixierung der Rohrschelle auf dem Verbindungsstück wird dann erreicht, wenn gemäss einer Weiterbildung der Erfindung auf der Aussenseite des Verbindungsstücks eine umlaufende Vertiefung angeordnet ist. Ein Abrutschen der Rohrschelle vom Verbindungsstück wird damit sicher vermieden.

Ein geeignetes Herstellungsverfahren für Kleinserien ergibt sich aus Anspruch 8. Für Grossserien eignet sich insbesondere das Verfahren gemäss Anspruch 10. Weitere vorteilhafte Merkmale und verfahrensschritte ergeben sich aus den übrigen abhängigen Ansprüchen sowie der nachfolgenden Beschreibung.

Ein Ausführungsbeispiel der Erfindung wird nachfolgend anhand der Zeichnungen näher erläutert. Es zeigen:

    Fig. 1a und 1b Ansichten eines Rohlings,
    Fig. 2a der Rohling nach der Einarbeitung von Rillen für einen Widerstandsheizdraht,
    Fig. 2b ein Schnitt entlang der Linie IIb-IIb in Fig. 2a,
    Fig. 3 eine teilweise geschnittene Ansicht eines erfindungsgemässen Verbindungsstücks,
    Fig. 4 eine weitere Ansicht eines erfindungsgemässen Verbindungsstücks, und
    Fig. 5 ein Schnitt durch eine Fixpunktbefestigung.

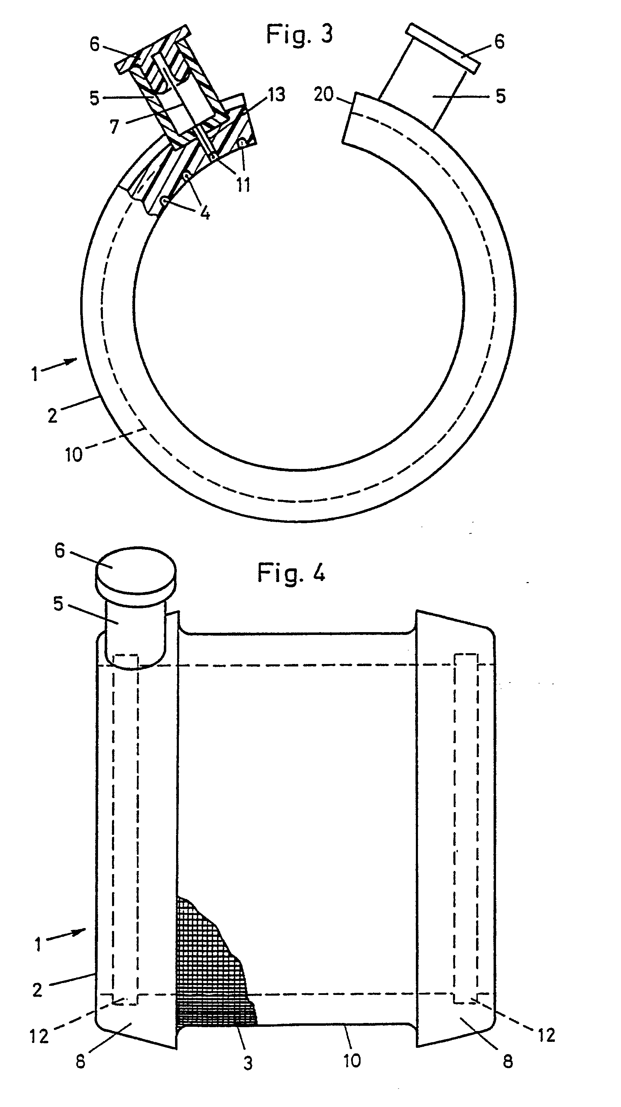

Wie insbesondere die Figuren 3 und 4 zeigen, weist das Verbindungsstück 1 einen ringförmigen Körper 2 auf, der aus einem thermoplastischem Kunststoff und vorzugsweise aus Hochdruckpolyäthylen hergestellt ist. Der Körper 2 besitzt eine Oeffnung 20, so dass er im Durchmesser erveitert werden kann. Der Winkel zwischen den beiden Enden des Körpers 2 und dem Mittelpunkt des Verbindungsstückes liegt vorzugsweise in einem Bereich von 10 bis etwa 80 Grad. Denkbar ist jedoch auch eine Ausführung, bei welcher sich die Enden des Körpes 2 berühren oder sogar überlappen.

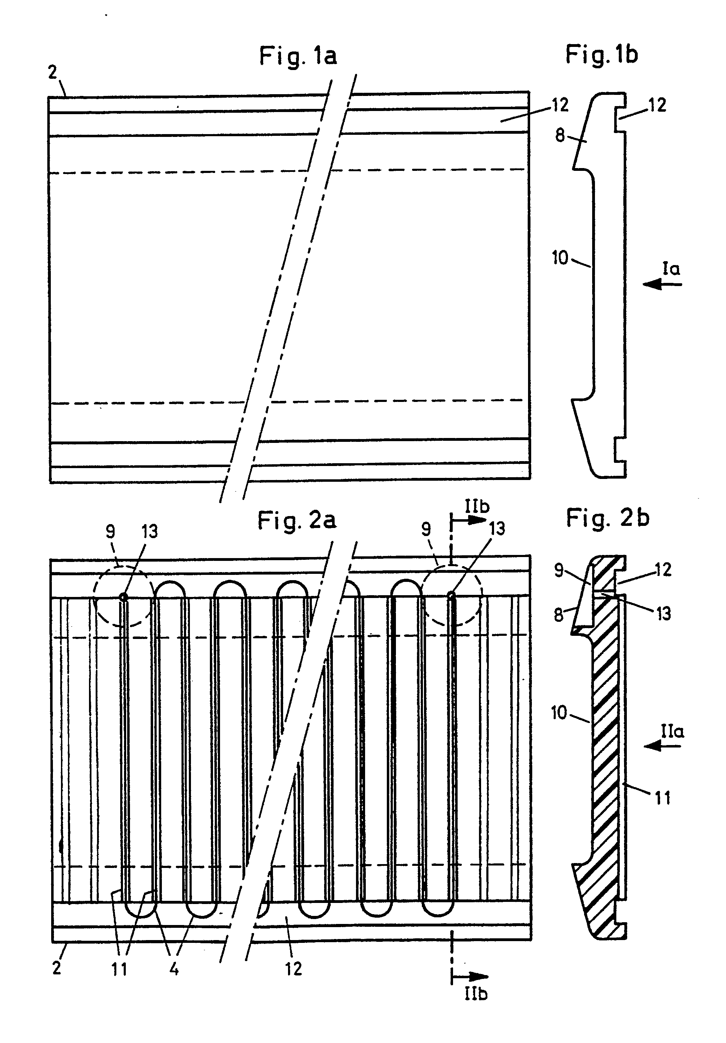

Auf der Innenseite des Körpers 2 sind parallel zueinander verlaufende Rillen 11 eingebracht, in die ein Widerstandsheizdraht 4 eingelegt ist. Der mäanderförmige Verlauf des Widerstandsheizdrahtes 11 ist in Fig. 2a gezeigt. Die beiden Enden 7 des Widerstandsheizdrahtes führen durch Durchbrüche 13 im Körper 2 nach aussen, wo sie in angeschweissten Anschlussbuchsen 5 enden. Diese Anschlussbuchsen 5 sind jeweils mit einem Schutzdeckel 6 als Schweissindikator verschlossen.

Wie die Fig. 4 zeigt, ist auf der Aussenseite des Körpers 2 eine sich in Umfangsrichtung erstreckende Vertiefung 10 angebracht. Diese ist mit einem Isolationsband 3 ausgelegt.

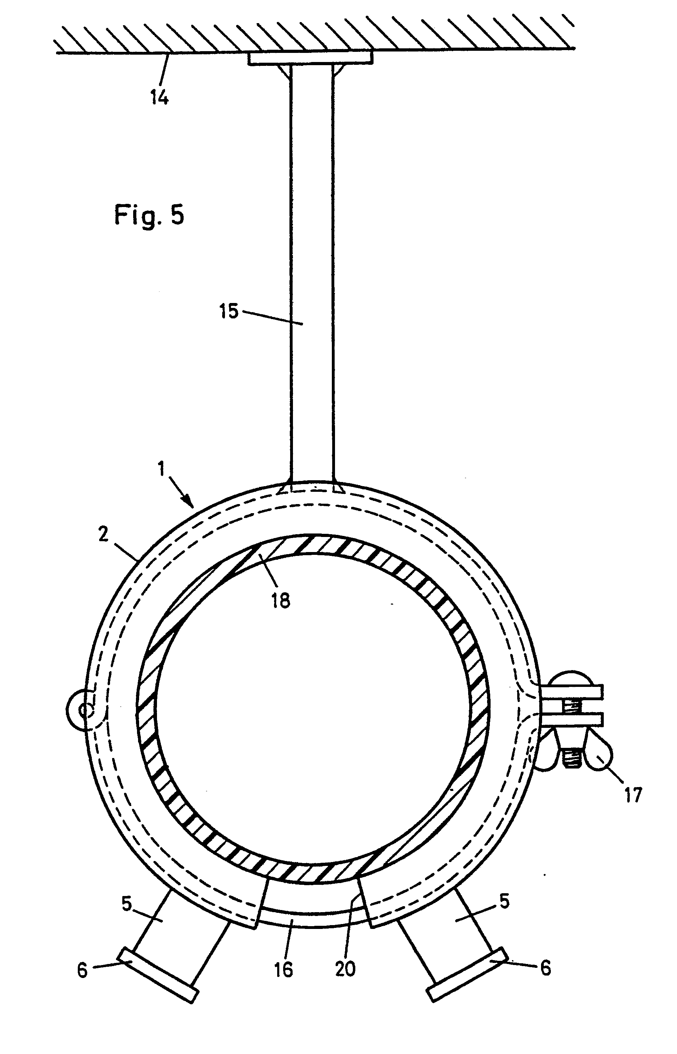

Die Fig. 5 zeigt eine Fixpunktbefestigung, bei welcher auf einer Rohrleitung 18 ein Verbindungsstück 1 aufgeschweisst ist. Auf der Aussenseite wird das Verbindungsstück 1 von einer üblichen Rohrschelle mit zwei Schellenkörpern 16 und einer Schraube 17 mit Mutter umfasst. Die Schellenkörper 16 liegen in der Vertiefung 10 und können auch bei starken Axialkräften nicht vom Verbindungsstück 1 abgleiten. Ueber einen Träger 15 ist die Rohrschelle beispielsweise mit einer Gebäudedecke 14 fest verbunden.

Zur Herstellung der Fixpunktbefestigung wird das Verbindungsstück 1 unter Dehnung der Oeffnung 20 radial auf die Rohrleitung 18 aufgesetzt. Nun wird die Rohrschelle um das Verbindungsstück 1 gelegt und dieses somit auf der Rohrleitung 18 fixiert. In üblicher Weise wird nun das Verbindungsstülck 1 mit der Rohrleitung 18 verschweisst. Hierbei verhindert das Isolationsband 3, dass der Widerstandsheizdraht 4, sollte er während des Schweissvorganges radial nach aussen wandern, mit der Rohrschelle 16 in Kontakt kommt.

Für Kleinserien eignet sich besonders das nachfolgende Verfahren:

Aus Hochdruckpolyäthylen wird das in den Figuren 1a und 1b gezeigte Profilband als Meterware extrudiert. In dieses Band werden die Rillen 11 durch fräsen oder hobeln eingearbeitet sowie entsprechend der Grösse des Verbindungsstückes Durchgangsbohrungen 13 erstellt. In die Rillen 11 wird nun der widerstandsheizdraht 4 mäanderförmig eingepresst. Für die Anschlussbuchsen S werden Vertiefungen 9 in Ränder 8 gefräst und in diese die Anschlussbuchsen eingesetzt und angeschweisst. In die Vertiefung 10 wird nun das Zsolationsband 3 eingelegt und am Körper 2 aufgeklebt. Das solchermassen ergänzte und bearbeitete Profilband wird nun entsprechend den Grössen der gewünschten Verbindungsstücke in kleinere Stücke zugeschnitten. Diese kleineren Stücke werden nun erwärmt und in Ringform gebracht, die sie nach dem Erstarren beibehalten.

Für Grossserien eignet sich hingegen das nachfolgende Herstellungsverfahren:

Hier wird ein bandförmiges Profil mit den Rillen 11 und den Anschlussbuchsen 5 in Spritzgussverfahren hergestellt. Nach dem Einlegen des Isolationsbandes 3 wird der Widerstandsheizdraht 4 in die Rillen 11 eingezogen und das Profilstück wie nach dem ersten Verfahren in Ringform gebracht.

## Ansprüche

1. Verbindungsstück, das dauerhaft mit einem Rohr aus thermoplastischem Material verschweissbar ist, mit einem zylindrischen Körper (2) aus thermoplastischem Material und einem widerstandsheizdraht (4), der zwei zum Stromanschluss dienende freie Enden (7) aufweist, gekennzeichnet durch eine auf den Durchmesser des Rohres (18) aufweitbare Oeffnung (20).

2. Verbindungsstück nach Anspruch 1, dadurch gekennzeichnet, dass es zur Herstellung einer Fixpunktbefestigung vorgesehen ist und auf der Aussenseite Mittel (10) zur Fixierung einer Rohrschelle (16) aufweist.

3. Verbindungsstück nach Anspruch 2, dadurch gekennzeichnet, dass auf der Aussenseite eine in Umfangsrichtung verlaufende Vertiefung (10) angeordnet ist, in welche die Rohrschelle (16) einlegbar ist.

4. Verbindungsstück nach Anspruch 2 oder 3, dadurch gekennzeichnet, dass auf der Aussenseite des Körpers (2) eine Isolation (3) aufgebracht ist.

5. Verbindungsstück nach Anspruch 4, dadurch gekennzeichnet, dass die Isolation ein Isolationsband (3) ist.

6. Verbindungsstück nach einem der Ansprüche 1 bis 5, dadurch gekennzeichnet, dass der Widerstandsheizdraht (4) in Rillen (11) eingelegt ist, die quer zur Umfangsrichtung des Körpers (2) verlaufen.

7. Verbindungsstück nach Anspruch 6, dadurch gekennzeichnet, dass die Rillen (11) in parallele und im Abstand zueinander angeordnete Nuten (12) enden, in welchen Nuten (12) der Widerstandsheizdraht (4) von einer Rille (11) zur anderen wechselt.

8. Verfahren zur Herstellung von Verbindungstükken nach Anspruch 1, gekennzeichnet durch folgende Verfahrensschritte:
   a) extrudieren eines Bandes aus thermoplastischem Material mit dem Profil des Körpers,
   b) einarbeiten von Rillen für den Widerstandsheizdraht, beispielsweise durch fräsen oder hobeln,
   c) einlegen des widerstandsheizdrahtes in der Form eines Mäanders in die Rillen,
   d) zuschneiden des Bandes entsprechend der Längen der Körper,
   e) wärmen der Körper,
   f) biegen der warmen Körper in Ringform und abkühlen lassen der Körper.

9. Verfahren nach Anspruch 8, dadurch gekennzeichnet, dass in die den Rillen gegenüberliegende Fläche des Körpers Vertiefungen zum Einsetzen von Anschlussbuchsen eingearbeitet werden.

10. Verfahren zur Herstellung von verbindungstükken nach Anspruch 1, dadurch gekennzeichnet, dass der Körper mit den Rillen einstückig mit dem Spritzgussverfahren hergestellt und der Widerstandsheizdraht in die Rillen eingelegt wird und dass anschliessend der Körper in Ringform gebracht wird.

Fig. 1a

Fig. 1b

Fig. 2a

Fig. 2b

## Fig. 3

## Fig. 4

EP 0 430 866 A2

Fig. 5

7